# EUROPEAN PATENT SPECIFICATION

(11) **EP 4 286 127 B1**
(45) Date of publication and mention of the grant of the patent: **19.11.2025**
(21) Application number: 23177242.7
(22) Date of filing: 05.06.2023
(51) Int. Cl.: B29B 11/16

(54) **A FIBROUS PREFORM COMPRISING A PLURALITY OF HOURGLASS-SHAPED VOIDS**
EINE FASERIGE VORFORM MIT EINER VIELZAHL VON SANDUHRFÖRMIGEN HOHLRÄUMEN
UNE PRÉFORME FIBREUSE COMPRENANT UNE PLURALITÉ DE VIDES EN FORME DE SABLIER

(30) Priority: 03.06.2022 US 202263348782 P
(43) Date of publication of application: 06.12.2023
(73) Proprietor: RTX Corporation, Farmington, CT 06032 (US)
(72) Inventor: CALLAWAY, Evan B., East Hartford, 06118 (US); LENZ, Brendan, East Hartford, 06118 (US)
(74) Representative: Dehns

(56) References cited:
- US-B2- 10 850 456
- US-B2- 8 192 662
- US-B2- 9 475 254

## Description

### BACKGROUND

The present invention relates to ceramic matrix composites, and more particularly to the preparation of woven ceramic fabrics for use in ceramic matrix composites.

In the processing of ceramic matrix composites, there is a need to infiltrate matrix within and around fibrous tow bundles to replace pore volume with dense matrix material. In a woven system, large voids often exist between adjacent tows of a preform-such voids can become large defects after infiltration of the composite that are detrimental to composite properties. The pore network through a woven system is often highly tortuous for infiltrating reactant vapors, which leads to uneven deposition through the thickness of the preform. Instead, higher concentrations tend to deposit on preform surfaces and edges. This leads to an overall slower and less uniform matrix infiltration process resulting in composites with undesirably porous midplanes. Thus, a need exists for means to facilitate even matrix infiltration.

US 10 850 456 B2 discloses a prior art fibrous preform as set forth in the preamble of claim 10.

US 9 475 254 B2 discloses a prior art multiaxial stack rigidly connected by means of weld points applied by means of inserted thermoplastic webs.

US 8 192 662 B2 discloses prior art processes for producing preform and fiber reinforced plastic.

### SUMMARY

From one aspect, there is provided a method of preparing a fibrous preform for use in a ceramic matrix composite as recited in claim 1.

There is also provided a fibrous preform as recited in claim 10.

Features of embodiments are set forth in the dependent claims.

### BRIEF DESCRIPTION OF THE DRAWINGS

FIG. 1 is a simplified cross-sectional view of a fibrous preform prior to perforation by a first embodiment of a spiked array.
FIGS. 2A and 2B are simplified illustrations of subsets of alternatively shaped spikes from the spiked array of FIG. 1.
FIG. 3 is a simplified cross-sectional view of a perforated fibrous preform showing voids formed by the spiked array of FIG. 1.
FIG. 4 is a simplified illustration of an alternative spiked array for use in perforating a fibrous preform.
FIG. 5 is a method flow chart illustrating steps of a method of preparing a perforated preform for use in a ceramic matrix composite (CMC).
FIG. 6 is a simplified cross-sectional view of a CMC formed using the method of FIG. 5.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents a method of and means for perforating a fibrous ceramic preform prior to densification via chemical vapor infiltration (CVI). Multiple embodiments of spiked arrays can be used to create hourglass-shaped voids through the thickness of the preform. Such voids facilitate access to the preform midplane by reactant vapors such that matrix deposits in a more even, inside-out manner.

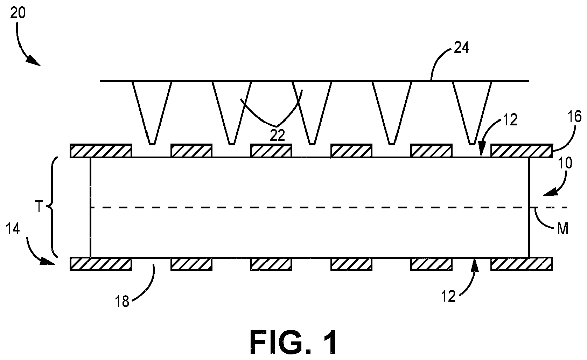

FIG. 1 is simplified cross-sectional view of a portion of fibrous preform 10 prior to perforation with spiked array 20. Preform 10 can be formed from bundled ceramic (e.g., silicon carbide - SiC) tows, arranged in one of various woven architectures such as plain, harness (e.g., 3, 5, 8, etc.), twill, braid, or non-symmetric to name a few non-limiting examples. Preform 10 can have a bimodal pore distribution including intra-tow pores (i.e., open spaces between filaments within a tow) and inter-tow pores (i.e., open spaces between adjacent tows). The combined inter-tow and intra-tow porosities can represent a total porosity of preform 10 (and the resulting CMC) as a whole. A midplane point, represented by line M, lies generally midway between opposing outer surfaces 12. Outer surfaces 12 also delimit a through-thickness T of the illustrated portion of preform 10.

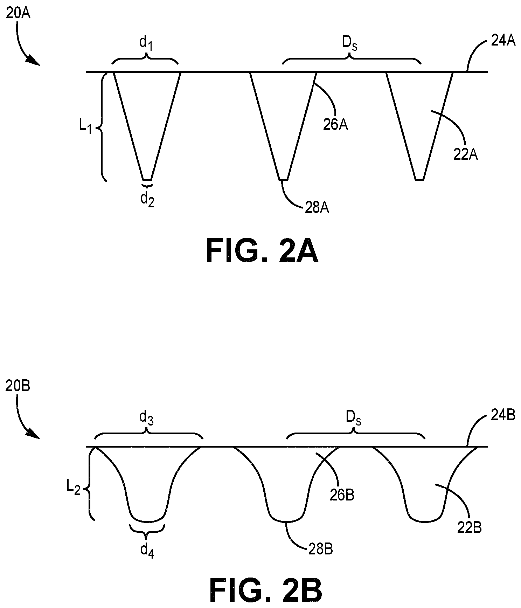

As shown in FIG. 1, preform 10 is situated within tooling 14, which can include opposing plates 16, one in contact with each preform outer surface 12. Plates 16 can be formed, for example, of graphite. Each plate 16 can include holes 18 which facilitate the passage of reactant vapors into preform 10 during the CVI process, as is discussed in greater detail below. Holes 18 can also serve as a guide for spiked array 20. Spiked array 20 can include multiple spikes 22 arranged in rows and columns on backplate 24 in alignment with holes 18 of plate 16. Each spike 22 can have a generally tapered three-dimensional shape with a base (labeled in FIGS. 2A and 2B as 26A and 26B, respectively), an oppositely disposed tip (labeled in FIGS. 2A and 2B as 28A and 28B, respectively), and a length (labeled in FIGS. 2A and 2B as L1 and L2, respectively) extending therebetween. Generally, the length of spikes 22 will be suitable to reach the midplane once pushed into preform 10 through one outer surface 12 or the other, as is discussed in greater detail below. The tips can be slightly to moderately blunted or rounded to reduce damage to the tows during insertion of spikes 22 into preform 10.

FIGS. 2A and 2B illustrate alternative embodiments of spikes array 20 of FIG. 1. More specifically, FIG. 2A is a simplified illustration of a subset of linear, conical spikes 22A of spiked array 20A shown in isolation. FIG. 2B is a simplified illustration of an alternative subset of spikes 22B with a non-linear, concave profile. FIGS. 2A and 2B are discussed together.

Spikes 22A extend from backplate 24A and have a conical geometry with a linear taper. Spikes 22B extend from backplate 24B and are non-linear with a combination of concave curvature and straight segments. Other combinations of curved and/or straight segments are possible, for example, with a further alternative embodiment including convexly curved (i.e., outwardly bowed) sides. As shown in FIGS. 2A and 2B, lengths L1, L2 of spikes 22A, 22B is generally uniform across a given spiked array 20A, 20B, although in an alternative embodiment, the length of one or a subset of spikes 22A, 22B can be greater than other spikes in a given array 20A, 20B. For example, longer spikes 22A, 22B may be necessary where curvature in preform 10 exists, as the outer surface 12 at such location can be further from (i.e., not flush with) plate 16.

Each spike 22A can be tapered such that base 26A has a base diameter d₁ that is wider than a tip diameter d₂. Similarly, each spike 22B can be tapered, although non-linearly, having a base diameter d₃ and a tip diameter d₄. In some cases, d₁ and/or d₃ can range from 1.0 x 10⁻¹ mm to 1.0 mm, and can further be between 1.1 and 10 times greater than d₂ and/or d₄. The distance D_{S} between adjacent spikes 22A and/or 22B can be taken from the center/midpoint of each base 26A, 26B. In either embodiment, distance D_{S} can range from 1.6 x 10⁻¹ mm (0.16 mm) to 7.62 mm. In one embodiment, spikes 22A and/or 22B can be formed from a printed polymer material, and any polymer contaminants in preform 20 from the perforation process would burn off during densification. In an alternative embodiment, spikes 22A and/or 22B can be formed from a ceramic-coated (e.g., SiC) metallic material, with any contaminants being from the ceramic coating and beneficially incorporated into the densified component. The dimensions and geometry of spikes 22A, 22B, as described, form holes or voids in preform 10 that are ideally sized and positioned to enhance matrix densification, as is discussed in greater detail below.

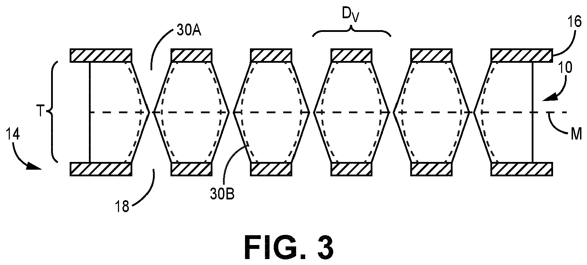

FIG. 3 is a simplified cross-sectional view of the portion of preform 10 from FIG. 1 after being perforated from both sides (i.e., through both outer surfaces 12) by spiked array 20A. Accordingly, FIG. 3 illustrates a perforated preform 10. As shown in FIG. 3, hourglass-shaped voids 30A which correspond generally to a geometry of spikes 22A having straight sides/edges. Voids 30A extend through thickness T of preform 10, and represent locations where spikes 22A were pushed into preform 10 from each outer surface 12 in such manner as to have opposing tips 28A more or less aligned. Dashed lines forming concave hourglass shapes represent an alternative geometry of void 30B which can be similarly formed by, for example, spikes 22B such that voids 30B have concave/curved sides. Accordingly, the geometry of each void 30A, 30B from the midplane to one outer surface 12 or the other corresponds to the three-dimensional geometry (i.e., shape, length, diameters, etc.) of an individual spike 22A, 22B, respectively, and further to the arrangement and spacing of the respective spiked array 20A, 20B. For example, spacing between adjacent voids 30A and/or 30B, or distance D_{V}, measured from the center of one void 30A and/or 30B at outer surface 12 to the center of the adjacent void 30A and/or 30B can be equal to the distance D_{S} between respective adjacent spikes 22A and/or 22B. Similarly, the widest points (at outer surfaces 12) of each void 30A and/or 30B will correspond in size and shape to base diameter d₁ and/or d₃, while the narrowest point (at the midplane) will correspond to tip diameter d₂ and/or d₄. Voids 30A and/or 30B further align with holes 18 within tooling 14. In an alternative embodiment, preform 10 can include voids with convexly curved sides if such spikes are included in the spiked array.

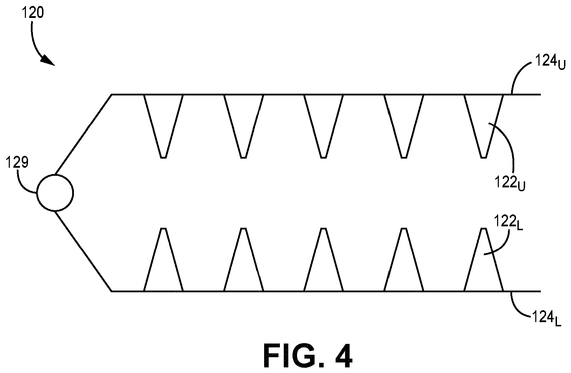

FIG. 4 is a simplified illustration of an alternative spiked array 120, shown as a two-sided pressing apparatus. Spiked array 120 includes upper backplate 124_{U} and lower backplate 124_{L} with respective upper and lower spikes 122_{U} and 122_{L} (collectively referred to as "spikes 122"). Spikes 122_{U} and 122_{L} can be substantially similar to spikes 22 discussed above. Backplate 124_{U} and 124_{L} are connected to hinge 129, and one or both backplates may be movable about hinge 129. In an alternative embodiment, one backplate (e.g., lower backplate 124_{L}) can be fixed, while the other backplate (e.g., upper backplate 124_{U}) can be moveable about hinge 129. Spiked array 120 can be used to perforate generally planar segments of preform 10, and need not be guided by holes 18 of tooling 14. This is due to the fact that upper spikes 122_{U} are aligned with corresponding lower spikes 122_{L}. Spiked array 120 may be preferable for quickly perforating relatively large areas (e.g., ~ 1.0 ft² (~0.09 m²)) of woven fabric. Additionally, since spiked array 120 can be used without tooling 14, the layout of upper and/or lower spikes 122_{U} and 122_{L} is not constrained by a requirement to match holes 18, and can be arranged in various array patterns, such as square, staggered, etc. Although shown with more conical spikes 122, spiked array 120 can additionally and/or alternatively includes spikes similar to those shown in FIG. 2B.

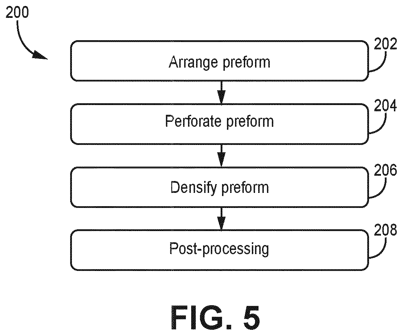

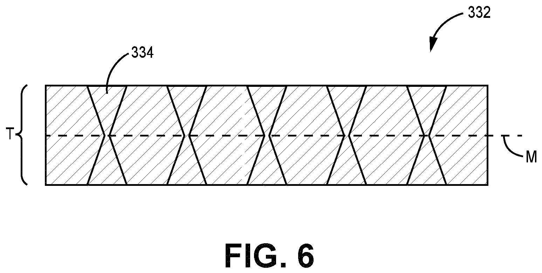

FIG. 5 is a method flowchart illustrating select steps of method 200 for preparing a perforated preform, such as preform 10 of FIG. 3, for use in a CMC. FIG. 6 is a simplified cross-sectional view of a section of CMC 332 formed using method 200. Method 200 is discussed together with FIGS. 1-4 and 6.

At step 202, a net shape or near-net shape preform (e.g., preform 10) can be arranged. Such a preform can include various layers of woven fiber plies, braids, etc., and can further include a polymer-based binder or tackifier such that the underlying ceramic fabric is wet and somewhat pliable.

At step 204, the preform can be perforated with a spiked array to form a perforated preform. In a first example using spiked array 20, preform 10 must first be mounted on graphite tooling 14. Spikes 22 can be aligned with holes 18 and inserted into preform 10 to the midplane. If using only a single spiked array 20, spikes 22 can be removed and aligned with holes 18 on the other (unperforated) side of preform 10 and inserted to reach the midplane such that the hourglass voids of FIG. 3 are formed. If using multiple spiked arrays 20, spikes 22 can be inserted more or less simultaneously in an aligned manner. In a second example using spiked array 120, step 204 can include placing a portion of the preform into the apparatus and bringing upper and lower backplates 124_{U} and 124_{L} together such that corresponding spikes 122_{U} and 122_{L} meet or nearly meet at the midplane. The perforated preform 10 can then be subsequently placed in requisite tooling in preparation for step 206.

In either the first or second example, spikes 22, 122 are inserted in such manner as to push apart, rather than break or fray the ceramic tows. The prior application of a polymer-based binder facilitates the ability of the ceramic tows to move and bend away from the spikes, as necessary. The preform can be dried and/or debulked via one or a combination of heat and pressure applied after the insertion of spikes, which can preferably remain in place during the drying step to prevent distortion of the shape of voids 30A and/or 30B, but may be removed in some cases.

At step 206, preform can undergo matrix formation and densification within a reaction chamber using CVI. As is shown in FIG. 3, voids 30A and/or 30B in perforated preform 10 align with holes 18 in graphite tooling 14, which gives the reactant vapors access to voids 30A and/or 30B. During densification, the fabric layers of perforated preform 10 are infiltrated by the reactant vapors, and a gaseous precursor deposits on the underlying fibers. The matrix material can be SiC or other suitable ceramic material. Densification is carried out until the resulting CMC has reached the desired residual porosity. If not previously burned off/decomposed, for example, during debulking, any polymer or ceramic contaminants from spikes 22, 122 remaining in preform 10 will burn off and/or decompose during step 206.

Because of the hourglass geometry of voids 30A and/or 30B, the matrix can deposit in an inside-out manner, referring directionally from the midplane to an outer surface 12. The widening in the outward direction due to the larger base diameter d₁ and/or d₃ prevents "canning off" of the preform region near the midplane, where the matrix deposits too quickly near the outer surface of the preform and prevents vapors from accessing the midplane region. This can lead to asymmetrical densification with an undesirably porous midplane region compared to sufficiently densified outer surfaces. CMC 332 is shown in FIG. 6 with matrix 334 deposited where voids 30A and/or 30B of preform 10 had been. Although shown somewhat exaggeratedly concentrated in voids 30A and/or 30B, it should be understood that matrix 334 deposits in and around fibers of preform 10 in a generally uniform manner. In CMCs formed from non-perforated preforms, or even those with cylindrical/straight holes, the final inter-tow porosity can range from 10% to 15% with a total porosity of over 20%. However, the disclosed perforated preforms can be used to form CMCs (e.g., CMC 332) with a final inter-tow porosity of less than 10% such that the total porosity of the CMC is less than 20%.

At step 208, various post-processing steps can be performed, such as the application of one or more protective coatings (e.g., environmental and/or thermal barrier coatings). A bond coat can also be applied to facilitate bonding between the CMC and a protective coating. Other protective coatings, especially those rendering CMC 332 suitable for use in a gas turbine engine environment, are contemplated herein.

A CMC formed with the disclosed perforated preforms can be incorporated into aerospace, maritime, or industrial equipment, to name a few, non-limiting examples.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of preparing a fibrous preform (10) for use in a ceramic matrix composite (332), the method comprising:
arranging the preform (10) from a woven ceramic material, the preform (10) comprising a pair of opposing outer surfaces (12) and a midplane (M) disposed between the pair of opposing outer surfaces (12); and
perforating the preform (10) with a spiked array (20; 20A; 20B; 120) comprising a backplate (24; 24A; 24B; 124) and a plurality of tapered spikes (22; 22A; 22B; 122) to form a perforated preform (10), wherein perforating the preform (10) includes pressing the plurality of tapered spikes (22; 22A; 22B; 122) through each of the opposing outer surfaces (12) of the preform to or nearly to the midplane (M) of the preform (10) such that the perforated preform (10) comprises:
a plurality of hourglass-shaped voids (30A; 30B) extending through a thickness (T) of the preform (10).

2. The method of claim 1 and further comprising: prior to perforating the preform (10), laying-up the preform (10) on tooling (14), the tooling (14) comprising a first plate (16) along one outer surface (12) of the pair of opposing outer surfaces (12), and a plurality of holes (18) through the first plate (16).

3. The method of claim 2, wherein the first plate (16) is formed from graphite.

4. The method of claim 2 or 3, wherein perforating the preform (10) comprises:
aligning the plurality of tapered spikes (22; 22A; 22B) of the spiked array (20; 20A; 20B) with the plurality of holes (18); and
pressing the plurality of tapered spikes (22; 22A; 22B) of the spiked array (20; 20A; 20B) into the preform (10) via the plurality of holes (18).

5. The method of claim 1, wherein the spiked array (120) is a two-sided pressing apparatus (120), and wherein perforating the preform (10) further comprises:
placing the preform (10) between a plurality of upper and lower spikes (122_{U}, 122_{L}) of the spiked array (120); and
pressing the upper and lower spikes (122_{U}, 122_{L}) into the preform (10).

6. The method of any preceding claim, wherein arranging the preform (10) further comprises: applying a polymer material to the preform (10) to wet the preform (10).

7. The method of claim 6, and further comprising: after perforating the preform (10), applying at least one of heat or pressure to dry the preform (10).

8. The method of any preceding claim and further comprising forming the ceramic matrix composite (332) by densifying the perforated preform (10) using chemical vapor infiltration.

9. The method of claim 8, further comprising applying at least one of a thermal barrier coating and an environmental barrier coating to the ceramic matrix composite (332).

10. A fibrous preform (10) comprising:
an arrangement of woven ceramic material;
a pair of oppositely disposed outer surfaces (12) defining a thickness (T) therebetween; and
a midplane (M) disposed between the pair of oppositely disposed surfaces (12),
**characterised in that**
the preform (10) comprises a plurality of hourglass-shaped voids (30A; 30B) extending through the thickness (T).

11. The preform (10) of claim 10, wherein the woven ceramic material comprises silicon carbide.

12. The preform (10) of claim 10 or 11, wherein each of the plurality of hourglass-shaped voids (30A; 30B) has at least one of linear or curved sides.

13. The preform (10) of any of claims 10 to 12, wherein a distance (D_{V}) from a center of a first void (30A; 30B) of the hourglass-shaped voids (30A; 30B) to a center of a second, adjacent hourglass-shaped void (30A; 30B) ranges from 1.6 x 10⁻¹ mm to 7.62 mm.

14. The preform (10) of any of claims 10 to 13, wherein a diameter (d₁; d₃) at a widest point of one of the plurality of hourglass-shaped voids (30A; 30B) ranges from 1.0 x 10⁻¹ mm to 1.0 mm, wherein a diameter (d₂; d₄) at a narrowest point of the one of the plurality of hourglass-shaped voids (30A; 30B) optionally ranges from 1.1 to 10 times less than the diameter (d₁; d₃) at the widest point.

15. A ceramic matrix composite (332) comprising:
the preform (10) of any of claims 10 to 14; and
a ceramic matrix (334) deposited on and around the woven ceramic material and filling the plurality of hourglass-shaped voids (30A; 30B);
wherein the ceramic matrix composite (332) optionally further comprises: an inter-tow porosity below 10%,
wherein the ceramic matrix (334) optionally comprises silicon carbide,
wherein the ceramic matrix composite (332) optionally further comprises: at least one of a thermal barrier coating and an environmental barrier coating.

## Patentansprüche

1. Verfahren zum Herstellen einer faserigen Vorform (10) zur Verwendung in einem Keramikmatrixverbundstoff (332), wobei das Verfahren Folgendes umfasst:
Anordnen der Vorform (10) aus einem gewebten Keramikmaterial, wobei die Vorform (10) ein Paar gegenüberliegender Außenflächen (12) und eine zwischen dem Paar gegenüberliegender Außenflächen (12) angeordnete Mittelebene (M) umfasst; und
Perforieren der Vorform (10) mit einer mit Spitzen versehenen Anordnung (20; 20A; 20B; 120), die eine Rückplatte (24; 24A; 24B; 124) und eine Vielzahl von konischen Spitzen (22; 22A; 22B; 122) umfasst, um eine perforierte Vorform (10) zu bilden, wobei das Perforieren der Vorform (10) Pressen der Vielzahl von konischen Spitzen (22; 22A; 22B; 122) durch jede der gegenüberliegenden Außenflächen (12) der Vorform bis oder nahezu bis zur Mittelebene (M) der Vorform (10) derart beinhaltet, dass die perforierte Vorform (10) Folgendes umfasst:
eine Vielzahl von sanduhrförmigen Hohlräumen (30A; 30B), die sich durch eine Dicke (T) der Vorform (10) erstrecken.

2. Verfahren nach Anspruch 1, ferner umfassend: vor dem Perforieren der Vorform (10) Auflegen der Vorform (10) auf ein Werkzeug (14), wobei das Werkzeug (14) eine erste Platte (16) entlang einer Außenfläche (12) des Paars gegenüberliegender Außenflächen (12) und eine Vielzahl von Löchern (18) durch die erste Platte (16) umfasst.

3. Verfahren nach Anspruch 2, wobei die erste Platte (16) aus Graphit gebildet wird.

4. Verfahren nach Anspruch 2 oder 3, wobei das Perforieren der Vorform (10) Folgendes umfasst:
Ausrichten der Vielzahl von konischen Spitzen (22; 22A; 22B) der mit Spitzen versehenen Anordnung (20; 20A; 20B) mit der Vielzahl von Löchern (18); und
Pressen der Vielzahl von konischen Spitzen (22; 22A; 22B) der mit Spitzen versehenen Anordnung (20; 20A; 20B) in die Vorform (10) durch die Vielzahl von Löchern (18).

5. Verfahren nach Anspruch 1, wobei die mit Spitzen versehene Anordnung (120) eine zweiseitige Pressvorrichtung (120) ist und wobei das Perforieren der Vorform (10) ferner Folgendes umfasst:
Platzieren der Vorform (10) zwischen einer Vielzahl von oberen und unteren Spitzen (122_{U}, 122_{L}) der mit Spitzen versehenen Anordnung (120); und
Pressen der oberen und unteren Spitzen (122_{U}, 122_{L}) in die Vorform (10).

6. Verfahren nach einem der vorhergehenden Ansprüche, wobei das Anordnen der Vorform (10) ferner Folgendes umfasst: Aufbringen eines Polymermaterials auf die Vorform (10), um die Vorform (10) zu benetzen.

7. Verfahren nach Anspruch 6, ferner umfassend: nach dem Perforieren der Vorform (10) Aufbringen von Wärme oder Druck, um die Vorform (10) zu trocknen.

8. Verfahren nach einem der vorhergehenden Ansprüche, umfassend Bilden des Keramikmatrixverbundstoffs (332) durch Verdichten der perforierten Vorform (10) unter Verwendung von chemischer Gasphaseninfiltration.

9. Verfahren nach Anspruch 8, ferner umfassend Aufbringen mindestens eines von einer Wärmedämmschicht und/oder einer Umgebungsdämmschicht auf den Keramikmatrixverbundstoff (332).

10. Faserige Vorform (10), umfassend:
eine Anordnung aus gewebtem Keramikmaterial;
ein Paar gegenüberliegend angeordneter Außenflächen (12), die eine Dicke (T) zwischen sich definieren; und
eine Mittelebene (M), die zwischen dem Paar gegenüberliegend angeordneter Flächen (12) angeordnet ist,
**dadurch gekennzeichnet, dass**
die Vorform (10) eine Vielzahl von sanduhrförmigen Hohlräumen (30A; 30B) umfasst, die sich durch die Dicke (T) erstrecken.

11. Vorform (10) nach Anspruch 10, wobei das gewebte Keramikmaterial Siliziumkarbid umfasst.

12. Vorform (10) nach Anspruch 10 oder 11, wobei jeder der Vielzahl von sanduhrförmigen Hohlräume (30A; 30B) mindestens eines von geraden oder gekrümmten Seiten aufweist.

13. Vorform (10) nach einem der Ansprüche 10 bis 12, wobei ein Abstand (D_{V}) von einem Mittelpunkt eines ersten Hohlraums (30A; 30B) der sanduhrförmigen Hohlräume (30A; 30B) zu einem Mittelpunkt eines zweiten, benachbarten sanduhrförmigen Hohlraums (30A; 30B) im Bereich von 1,6 × 10⁻¹ mm bis 7,62 mm liegt.

14. Vorform (10) nach einem der Ansprüche 10 bis 13, wobei ein Durchmesser (d₁; d₃) an einer breitesten Stelle eines der Vielzahl von sanduhrförmigen Hohlräumen (30A; 30B) im Bereich von 1,0 × 10⁻¹ mm bis 1,0 mm liegt, wobei ein Durchmesser (d₂; d₄) an einer engsten Stelle des einen der Vielzahl von sanduhrförmigen Hohlräumen (30A; 30B) optional im Bereich von 1,1 bis 10 Mal kleiner ist als der Durchmesser (d₁; d₃) an der breitesten Stelle.

15. Keramikmatrixverbundstoff (332), umfassend:
die Vorform (10) nach einem der Ansprüche 10 bis 14; und
eine Keramikmatrix (334), die auf und um das gewebte Keramikmaterial herum abgelagert ist und die Vielzahl von sanduhrförmigen Hohlräumen (30A; 30B) füllt;
wobei der Keramikmatrixverbundstoff (332) optional ferner Folgendes umfasst: eine Zwischenfaserporosität unter 10 %,
wobei die Keramikmatrix (334) optional Siliziumkarbid umfasst,
wobei der Keramikmatrixverbundstoff (332) optional ferner Folgendes umfasst: mindestens eines von einer Wärmedämmschicht und einer Umgebungsdämmschicht.

## Revendications

1. Procédé de préparation d'une préforme fibreuse (10) destinée à être utilisée dans un composite à matrice céramique (332), le procédé comprenant :
l'agencement de la préforme (10) à partir d'un matériau céramique tissé, la préforme (10) comprenant une paire de surfaces externes opposées (12) et un plan médian (M) disposé entre la paire de surfaces externes opposées (12) ; et
la perforation de la préforme (10) à l'aide d'un réseau de pointes (20 ; 20A ; 20B ; 120) comprenant une plaque arrière (24 ; 24A ; 24B ; 124) et une pluralité de pointes effilées (22 ; 22A ; 22B ; 122) pour former une préforme perforée (10), dans lequel la perforation de la préforme (10) comporte l'enfoncement de la pluralité de pointes effilées (22 ;
22A ; 22B ; 122) à travers chacune des surfaces externes opposées (12) de la préforme jusqu'au plan médian (M) de la préforme (10), ou presque, de telle sorte que la préforme perforée (10) comprend :
une pluralité de vides en forme de sablier (30A ; 30B) se prolongeant à travers une épaisseur (T) de la préforme (10).

2. Procédé selon la revendication 1 et comprenant également : avant de perforer la préforme (10), la pose de la préforme (10) sur un outillage (14), l'outillage (14) comprenant une première plaque (16) le long d'une surface externe (12) de la paire de surfaces externes opposées (12), et une pluralité de trous (18) à travers la première plaque (16).

3. Procédé selon la revendication 2, dans lequel la première plaque (16) est formée de graphite.

4. Procédé selon la revendication 2 ou 3, dans lequel la perforation de la préforme (10) comprend :
l'alignement de la pluralité de pointes effilées (22 ; 22A ; 22B) du réseau de pointes (20 ; 20A ; 20B) avec la pluralité de trous (18) ; et
l'enfoncement de la pluralité de pointes effilées (22 ; 22A ; 22B) du réseau de pointes (20 ; 20A ; 20B) dans la préforme (10) par l'intermédiaire de la pluralité de trous (18).

5. Procédé selon la revendication 1, dans lequel le réseau de pointes (120) est un appareil d'enfoncement à deux côtés (120), et dans lequel la perforation de la préforme (10) comprend également :
le placement de la préforme (10) entre une pluralité de pointes supérieures et inférieures (122_{U}, 122_{L}) du réseau de pointes (120) ; et
l'enfoncement des pointes supérieures et inférieures (122_{U}, 122_{L}) dans la préforme (10).

6. Procédé selon une quelconque revendication précédente, dans lequel l'agencement de la préforme (10) comprend également : l'application d'un matériau polymère sur la préforme (10) pour mouiller la préforme (10).

7. Procédé selon la revendication 6, comprenant également : après la perforation de la préforme (10), l'application d'au moins l'une de chaleur ou de pression pour sécher la préforme (10).

8. Procédé selon une quelconque revendication précédente et comprenant également la formation du composite à matrice céramique (332) par densification de la préforme perforée (10) à l'aide d'une infiltration chimique en phase vapeur.

9. Procédé selon la revendication 8, comprenant également l'application d'au moins l'un d'un revêtement de barrière thermique et d'un revêtement de barrière environnementale sur le composite à matrice céramique (332).

10. Préforme fibreuse (10) comprenant :
un agencement de matériau céramique tissé ;
une paire de surfaces externes opposées (12) définissant une épaisseur (T) entre elles ; et
un plan médian (M) disposé entre la paire de surfaces disposées de manière opposée (12),
**caractérisée en ce que**
la préforme (10) comprend une pluralité de vides en forme de sablier (30A ; 30B) se prolongeant à travers l'épaisseur (T).

11. Préforme (10) selon la revendication 10, dans laquelle le matériau céramique tissé comprend du carbure de silicium.

12. Préforme (10) selon la revendication 10 ou 11, dans laquelle chacun de la pluralité de vides en forme de sablier (30A ; 30B) a au moins l'un de côtés linéaires ou incurvés.

13. Préforme (10) selon l'une quelconque des revendications 10 à 12, dans laquelle une distance (D_{V}) d'un centre d'un premier vide (30A ; 30B) des vides en forme de sablier (30A ; 30B) à un centre d'un deuxième vide en forme de sablier (30A ; 30B) adjacent est comprise entre 1,6 × 10⁻¹ mm et 7,62 mm.

14. Préforme (10) selon l'une quelconque des revendications 10 à 13, dans laquelle un diamètre (d₁ ; d₃) au niveau du point le plus large d'un de la pluralité de vides en forme de sablier (30A ; 30B) est compris entre 1,0 × 10⁻¹ mm et 1,0 mm, dans laquelle un diamètre (d₂ ; d₄) au niveau du point le plus étroit de l'un de la pluralité de vides en forme de sablier (30A ; 30B) est éventuellement compris entre 1,1 et 10 fois moins que le diamètre (d₁ ; d₃) au niveau du point le plus large.

15. Composite à matrice céramique (332) comprenant :
la préforme (10) selon l'une quelconque des revendications 10 à 14 ; et
une matrice céramique (334) déposée sur et autour du matériau céramique tissé et remplissant la pluralité de vides en forme de sablier (30A ; 30B) ;
dans lequel le composite à matrice céramique (332) comprend éventuellement également : une porosité inter-câbles inférieure à 10 %,
dans lequel la matrice céramique (334) comprend éventuellement du carbure de silicium,
dans lequel le composite à matrice céramique (332) comprend éventuellement également : au moins l'un d'un revêtement de barrière thermique et d'un revêtement de barrière environnementale.
